# EUROPEAN PATENT SPECIFICATION

(11) **EP 1 361 793 B1**
(45) Date of publication and mention of the grant of the patent: **05.10.2005**
(21) Application number: 02712546.7
(22) Date of filing: 25.01.2002
(51) Int. Cl.: A01N 25/34, A01N 25/00

(54) **METHOD FOR CONTROLLING THE TEMPERATURE IN WAX COATED PLANT TISSUE**
VERFAHREN ZUR REGULATION DER TEMPERATUR IN WACHSBESCHICHTETEM PFLANZENGEWEBE
PROCEDE DE REGULATION DE LA TEMPERATURE DANS DES TISSUS DE PLANTE ENROBES DE CIRE

(30) Priority: 05.02.2001 NO 20010607
(43) Date of publication of application: 19.11.2003
(73) Proprietor: NORSK HYDRO ASA, 0240 Oslo (NO)
(72) Inventor: PETTERSEN, Jarl, Markus, N-3274 Larvik (NO); GRUE, Oeyvind, N-3960 Stathelle (NO); LIE, Reidar, N-1357 Bekkestua (NO)
(74) Representative: Bleukx, Lucas Lodewijk M.
(86) International application number: PCT/NO2002/000036
(87) International publication number: WO 2002/065837

(56) References cited:
- EP-A1- 0 903 081
- DE-A1- 3 641 680
- SE-A- 7 711 141
- MAGNUS PETERSSON: 'Mekaniska snytbaggeskydd for barrot- och tackrotsplantor, anlagt 1996' SVERIGES LANTBRUKSUNIVERSITET no. 3, 2000, pages 1 - 14, XP002905430
- CLAES HELLQVIST ET AL.: 'Temperaturmatning vid vaxbehandling av plantor' HOGSKOLAN DALARNA, CITU 1997, pages 1 - 13, XP002950431

## Description

The invention relates to pigmentation of waxes which are applied to plant cuttings and small plants.

When small plants and cuttings shall establish, they are exposed to different types of strain and stress. This can be dehydration and insect attacks. To reduce the strain on the plants and improve the establishment, different amounts of mineral wax can be applied to the plants. Examples of waxing of small plants / cuttings are waxing of forest plants to protect against gnawing insects, and use of wax in production of grape cuttings. The grape cuttings are waxed to prevent dehydration of new plant tissue.

For maximum forest production clear cuttings and replantation are normal forest management. If the seedlings are not protected in any way, they will to a large extent be destroyed and killed by insect attacks. For conifer seedlings the weevil (*Hylobius abietis*) is by far the greatest problem in Eurasian forests. The traditional method to reduce insect damage is application of chemical insecticides. For the past years different alternatives to application of insecticides have been evaluated and the goal has been to avoid use of chemical insecticides.

An alternative way is described in Norwegian Patent No. 303042 where wax is applied to the lower part of the stem, particularly on conifer seedlings to avoid insect attacks. The wax is applied by spraying molten or liquid wax on the plants. Said method can be applied to all types of living plants where protection against insect attacks is wanted.

Swedish patent application SE 7711141 concerns a method for eliminating or reducing attacks by insects, in particular pine weevils, in connection with planting/newly created spruce and pine plantation. This is done by applying a film-forming agent like paint and additives to the saplings. The composition is applied in a cold state and the solvents must evaporate before a solid coating is formed. The composition forms an elastic layer and can contain mineral materials for reinforcement and a marking substance such as a colouring pigment.

In Sveriges lantbruksuniversitet, n°3, 2000, Magnus Petersson, "Mekaniska snytbaggeskydd för barrot- och täckrotsplantor, anlagt 1996", the use of certain materials or material combinations for preventing insect attacks on plants including mineral wax, tar, glue and sand and preformed plastic products is disclosed.

European patent application EP 0 903 081 concerns a pesticidal agent for use on plants containing a resin, a solvent and a carrier material, such as ground rock, wherein the carrier material represents 10-90% of the total composition and the resin acts as a binder.

German patent application DE 36 41 680 concerns a substance for the poison-free protection of the bark of young woodland plants against feeding damage caused by insects, especially the large brown pine weevil, the substance being composed of a mixture of open-pored dispersion adhesive and ground minerals.

In the following wax is defined as a artificially applied coating which may contain mineral waxes, resins, polymer compounds and other additives such as pigments and colouring matter, growth hormones and fungicides.

Plants which are treated with molten wax can be biologically damaged in the exterior part of the trunk during the treatment. This is a physiological damage which is caused by the heat strain the wax represents to the plant. The probability that such damages shall arise is connected to the temperature of the wax, the amount of wax being applied and the biological condition of the plants during the treatment. Practical measures can be initiated to reduce such damages in the nursery. Proper handling in the nursery to avoid treatment damages is to keep the wax temperature under control up to the plant, for instance by using a water based heat jacket on the wax carrying parts. Furthermore, cold air and/or water can be led over the plant immediately after the wax treatment.

It is necessary that the plants are in a good biological condition during the treatment because the waxing represents a small, but not insignificant, strain on the plant condition. In addition to damages of the above categories, damage on wax treated plants caused by other conditions sometimes occur. A hypothesis is that the wax causes a strong heating of the plant when it is exposed to sunlight or other heat radiation. The heat radiation can pass through the transparent wax and cause heating of the plant tissue itself. Because the wax in solid state is a bad heat conductor, temperature levels may arise which damage the plant when the wax coating is overall. In such cases the wax works as a local greenhouse on that part of the plant which is covered by wax. On said parts, the plant is not able to transpire. The plant may reduce exterior heat influence and radiation by evaporation of water.

Thus, the object of the invention is to provide a method and wax composition where the above-mentioned disadvantages are avoided. Another object is to prevent that the wax itself is strongly heated and thereby reduce the risk that molten wax shall be formed which can damage the plant by contact. A further object is to control the temperature the plant experiences.

This and other objects of the invention are obtained by the method and composition as described in the following. The invention will be further defined and characterized by the enclosed patent claims.

The invention thus relates to a method for controlling the temperature in the active tissue of plants having a wax coating on the stem/trunk and for reducing UVa radiation, by adding 0.5 -5 weight % of a pigment to the wax. One or several light pigments as titanium dioxide, zinc oxide, zinc sulphide and zinc phosphate or grinded minerals as quarts, kaolin, chalk, marble, limestone, dolomite and gypsum can be added to reduce heat radiation. Alternatively, dark pigments can be added to the wax to raise the temperature of the plant.

The invention also concerns a wax composition used for preventing insect attacks on plants' trunk/stem and/or controlling the temperature in plants' active tissue, consisting of a micro crystalline wax with melting point 67 - 80 °C. Such waxes should contain little oil defined as < 5 weight % hydrocarbons having a chain length belowr C25 and pigments. The pigment content is 0.5 - 5 weight % and the pigments are one or several chosen among light pigments as titanium dioxide, zinc oxide, zinc sulphide and zinc phosphate or grinded minerals as quarts, kaolin, chalk, marble, limestone, dolomite and gypsum, or dark pigments as carbon.

The invention also relates to the use of a wax containing light pigments on the trunk/stem of living plants to prevent insect attacks and/or prevent damages on the active tissue of the plants caused by overheating or UVa radiation and use of a wax containing dark pigments on the trunk/stem of living plants to prevent insect attacks and/or to raise the temperature of the active tissue of the plants. The same amounts and type of pigments as stated above are used.

One of the ideas is to reduce the temperature increase caused by heat radiation by adding a white pigment to the wax. By such addition of white pigment the wax will be less transparent and also reflect as much as possible of the radiated energy. Said wax properties can give a better protection of the newly formed tissue against UVa rays and reduce the amount of heat that the plant is exposed to. All together this could reduce the frequency of damages in areas with large radiation strain and on plants which are particularly sensitive to such influence.

From earlier published works from the painting industry it is known that white colour causes lowest heating of steel tanks placed in a warm climate. For this reason it is assumed that just a white pigment will give the best effect when the application of wax on living plants which are exposed to strong radiation is studied, but all light pigments will have an effect. Examples of suitable pigments are titanium dioxide, zinc oxide, grinded minerals as quarts/kaolin/chalk/marble/limestone/dolomite/gypsum, zinc sulphide and zinc phosphate.

Pigmentation of wax can also be used in another way. By adding dark pigments to the wax the temperature the plant experiences can be raised. This can be utilized to give the plants better growth conditions in colder climate.

The invention will be further illustrated with reference to the following example.

### EXAMPLE

In an experiment on grape plant cuttings coated with wax, it was studied how the temperature in the exterior plant tissue is influenced by different wax treatments. The temperature was in addition measured when the wax was totally removed from the plant.

The results in Table 1 show the temperature measured by means of thermo elements placed 0.5 mm in newly formed, humid callus tissue from grape plants within an area of one square meter. All of the temperatures are measured simultaneously and the thermo element was placed on the south side of the plant. Because of the size of the plant the measuring point is about 15 cm over ground level for all of the measurements.

**Table 1.**

| | | | | |
|---|---|---|---|---|
| Temperature measured in new callus tissue on grape cuttings under moderate sun radiation. All temperatures are given in degrees Celsius. | | | | |

| Time | Without wax | Wax without colour | Transparent green wax | Pigmented with TiO₂ |
|---|---|---|---|---|
| 12:28 | 29.6 | 37.8 | 37.7 | 33.9 |
| 13:00 | 30.0 | 37.8 | 37.6 | 33.1 |
| 13:30 | 31.6 | 38.2 | 38.5 | 33.7 |
| 13:46 | 31.7 | 38.0 | 39.0 | 34.4 |
| 14:00 | 31.2 | 37.0 | 37.6 | 34.4 |
| 14:49 | 31.9 | 36.8 | 36.8 | 34.7 |
| Max. | 32.6 | 38.3 | 39.0 | 34.8 |
| Min. | 29.1 | 35.2 | 36.2 | 32.9 |

From the measurements shown in Table 1 it is evident that the temperature in the plant will be considerably lower when a white pigment is added to the wax. All of the above wax types are based on the same basis wax, it is only the colouring matter / pigment that is different. It can also be seen from the Table that the wax with green colouring matter gives the highest temperature.

In plant production techniques using wax, a wax with a white pigment can make it possible to produce plants in warmer climate where this is not possible today or causes great losses. Examples of such areas are Sicily, California, Africa, Argentina, Chile, etc.

For plants having little heat tolerance in field the possibility to survive will increase with wax coating on the plant. An example of such use is small wax treated spruce plant cuttings.

Example of recipe with TiO₂ which is suitable for small forest plant cuttings is:

| | |
|---|---|
| AW 5530 (Astor) | 56 % |
| AW 3040 (Astor) | 36 % |
| Escorez 1310 (Exxon) | 5 % |
| EVA | 2.3 % |
| TiO₂ | 0.7 % |

Example of recipe with TiO₂ which is suitable for grape cuttings is:

| | |
|---|---|
| Micro 20 30 (Total) | 46 % |
| Micro 74/78 | 16 % |
| Paraffin wax 56/58 | 34 % |
| EVA | 2.5 % |
| TiO₂ | 1.5 % |

A wax added a white pigment as TiO₂, ZnO or similar pigments, will thus be an advance for wax products being applied to living plants. The purpose of the additive is both to prevent heat radiation and to reduce UVa radiation on newly formed plant tissue. If dark pigments are added, good growth conditions can be obtained also at lower temperatures.

## Claims

1. Method for controlling the temperature in the active tissue of plants having a wax coating on the stem/trunk and reducing UVa radiation, by adding 0.5-5 weight % of a pigment to the wax.

2. Method according to claim 1, where one or several light pigments as titanium dioxide, zinc oxide, zinc sulphide and zinc phosphate or grinded minerals as quartz, kaolin, chalk, marble, limestone, dolomite and gypsum are added to reduce heat radiation.

3. Method according to claim1, where dark pigments are added to raise the temperature in the plant.

4. Wax composition used for controlling the temperature in plants' active tissue, comprising a micro crystalline wax with melting point 67-80° C, < 5 weight % hydrocarbons having a chain length below C25 wherein the wax contains 0.5-5 weight % pigments being one or more selected among light pigments as titanium dioxide, zinc oxide, zinc sulphide and zinc phosphate or grinded minerals as quartz, kaolin, chalk, marble, limestone, dolomite and gypsum, or dark pigments like carbon.

5. Use of a wax containing light pigments on the trunk/stem of living plants to prevent damages on the active tissue of the plants caused by overheating or UVa radiation.

6. Use of a wax containing dark pigments on the trunk/stem of living plants to raise the temperature of the active tissue of the plants.

7. Use according to claim 5 or 6, where the pigment content is 0.5-5 weight %.

8. Use according to claim 5, where the pigments are one or several chosen among light pigments as titanium dioxide, zinc oxide, zinc sulphide and zinc phosphate or grinded minerals as quartz, kaolin, chalk, marble, limestone, dolomite and gypsum.

## Patentansprüche

1. Verfahren zum Regeln der Temperatur im aktiven Gewebe von Pflanzen, die eine Wachsbeschichtung am Stängel/Stamm aufweisen, und Reduzieren der UVA-Strahlung durch Zusetzen von 0,5 - 5 Gew.-% eines Pigments zum Wachs.

2. Methode nach Anspruch 1, wobei ein oder mehrere leichte Pigmente wie Titandioxid, Zinkoxid, Zinksulfid und Zinkphosphat oder gemahlene Mineralien wie Quarz, Kaolin, Kalk, Marmor, Kalkstein, Dolomit und Gips zum Reduzieren der Wärmestrahlung zugesetzt werden.

3. Methode nach Anspruch 1, wobei dunkle Pigmente zum Erhöhen der Temperatur in der Pflanze zugesetzt werden.

4. Wachszusammensetzung, die zum Regeln der Temperatur im aktiven Gewebe von Pflanzen verwendet wird, umfassend ein mikrokristallines Wachs mit einem Schmelzpunkt von 67 - 80 °C, < 5 Gew.-% Kohlenwasserstoffe mit einer Kettenlänge unter C25, wobei das Wachs 0,5 - 5 Gew.-% Pigmente enthält, bei denen es sich um ein oder mehrere handelt ausgewählt unter leichten Pigmenten wie Titandioxid, Zinkoxid, Zinksulfid und Zinkphosphat oder gemahlenen Mineralien wie Quarz, Kaolin, Kalk, Marmor, Kalkstein, Dolomit und Gips oder dunklen Pigmenten wie Kohlenstoff.

5. Verwendung von leichte Pigmente enthaltendem Wachs am Stängel/Stamm von lebenden Pflanzen zum Verhindern von Schäden am aktiven Gewebe der Pflanzen, die durch Überhitzen oder UVA-Strahlung verursacht werden.

6. Verwendung von dunkle Pigmente enthaltendem Wachs am Stängel/Stamm von lebenden Pflanzen zum Erhöhen der Temperatur des aktiven Gewebes der Pflanzen.

7. Verwendung nach Anspruch 5 oder 6, wobei der Pigmentgehalt 0,5 - 5 Gew.-% beträgt.

8. Verwendung nach Anspruch 5, wobei es sich bei den Pigmenten um eines oder mehrere handelt ausgewählt unter leichten Pigmenten wie Titandioxid, Zinkoxid, Zinksulfid und Zinkphosphat oder gemahlenen Mineralien wie Quarz, Kaolin, Kalk, Marmor, Kalkstein, Dolomit und Gips.

## Revendications

1. Procédé pour réguler la température dans le tissu actif de plantes ayant un revêtement de cire sur la tige/le tronc et pour réduire le rayonnement UVa, par addition de 0,5-5 % en poids d'un pigment à la cire.

2. Procédé selon la revendication 1, dans lequel un ou plusieurs pigments clairs comme le dioxyde de titane, l'oxyde de zinc, le sulfure de zinc et le phosphate de zinc ou des minéraux moulus comme le quartz, le kaolin, la craie, le marbre, le calcaire, la dolomie et le gypse sont ajoutés pour réduire le rayonnement thermique.

3. Procédé selon la revendication 1, dans lequel des pigments foncés sont ajoutés pour augmenter la température dans la plante.

4. Composition de cire utilisée pour réguler la température dans le tissu actif de plantes, comprenant une cire microcristalline ayant un point de fusion de 67-80 °C, < 5 % en poids d'hydrocarbures ayant une longueur de chaîne inférieure à C25, dans laquelle la cire contient 0,5-5 % en poids de pigments dont un ou plusieurs sont sélectionnés parmi des pigments clairs comme le dioxyde de titane, l'oxyde de zinc, le sulfure de zinc et le phosphate de zinc ou des minéraux moulus comme le quartz, le kaolin, la craie, le marbre, le calcaire, la dolomie et le gypse, ou des pigments foncés comme le charbon.

5. Utilisation d'une cire contenant des pigments clairs sur le tronc/la tige de plantes vivantes pour prévenir les dommages au tissu actif des plantes causés par un chauffage excessif ou le rayonnement UVa.

6. Utilisation d'une cire contenant des pigments foncés sur le tronc/la tige de plantes vivantes pour augmenter la température du tissu actif des plantes.

7. Utilisation selon la revendication 5 ou 6, dans laquelle la teneur en pigments est de 0,5-5 % en poids.

8. Utilisation selon la revendication 5, dans laquelle les pigments sont un ou plusieurs pigments choisis parmi des pigments clairs comme le dioxyde de titane, l'oxyde de zinc, le sulfure de zinc et le phosphate de zinc ou des minéraux moulus comme le quartz, le kaolin, la craie, le marbre, le calcaire, la dolomie et le gypse.
